# EUROPÄISCHE PATENTSCHRIFT

(11) **EP 3 108 149 B1**
(45) Veröffentlichungstag und Bekanntmachung des Hinweises auf die Patenterteilung: **10.04.2019**
(21) Anmeldenummer: 15703458.8
(22) Anmeldetag: 07.02.2015
(51) Int. Cl.: F16B 35/04, F16B 21/18, F16B 35/06, F16B 5/06, F16B 41/00, F16B 37/14

(54) **BEFESTIGUNGSEINRICHTUNG ZUR MANIPULATIONSGESCHÜTZTEN BEFESTIGUNG SOWIE BAUTEILANORDNUNG**
FASTENING DEVICE FOR TAMPER-PROOF FASTENING, AND COMPONENT ASSEMBLY
DISPOSITIF DE FIXATION POUR FIXATION INVIOLABLE ET AGENCEMENT DE COMPOSANTS

(30) Priorität: 22.02.2014 DE 102014002541
(43) Veröffentlichungstag der Anmeldung: 28.12.2016
(73) Patentinhaber: Audi AG, 85045 Ingolstadt (DE)
(72) Erfinder: HORNISCHER, Jörg, 85139 Wettstetten (DE); HENNIG, Bernhard, 85051 Ingolstadt (DE)
(74) Vertreter: Askaryar, Jama
(86) Internationale Anmeldenummer: PCT/EP2015/000256
(87) Internationale Veröffentlichungsnummer: WO 2015/124267

(56) Entgegenhaltungen:
- DE-A1-102007 041 537
- DE-A1-102011 052 190
- DE-U1- 20 117 323
- DE-U1- 20 315 778
- GB-A- 2 465 371
- US-A- 2 151 284
- US-A- 3 724 150
- US-A- 4 209 660

## Beschreibung

Die Erfindung betrifft eine Befestigungseinrichtung zur manipulationsgeschützten Befestigung eines ersten Bauteils an einem zweiten Bauteil, wobei die Befestigungseinrichtung über eine Schraube verfügt, die einen zumindest teilweise in einer Aufnahme des ersten Bauteils anordenbaren Betätigungsbereich und einen sich an dem Betätigungsbereich anschließenden, mit dem zweiten Bauteil in Halteverbindung bringbaren Gewindebereich aufweist. Die Erfindung betrifft weiterhin eine Bauteilanordnung.

Bei zahlreichen Bauteilverbindungen von Bauteilen, beispielsweise dem ersten Bauteil und dem zweiten Bauteil, ist es wünschenswert, eine Manipulation der Verbindung zu verhindern oder zumindest erkennbar zu machen. Unter einer Manipulation ist dabei insbesondere ein Lösen der Befestigung zu verstehen. Beispielsweise sind das erste Bauteil und das zweite Bauteil Bestandteile eines Gehäuses, welches eine Einrichtung, insbesondere eine elektrische Einrichtung, wenigstens bereichsweise, vorzugsweise vollständig, einschließt. Das Gehäuse verhindert insoweit also zum Beispiel, dass eine Person von außerhalb des Gehäuses in Berührkontakt mit der Einrichtung geraten kann. Dies ist insbesondere dann geboten, wenn die Einrichtung als elektrische Einrichtung ausgestaltet ist und Hochvoltkomponenten enthält, welche während ihres Betriebs mit hohen Spannungen, insbesondere von mindestens 100 V, mindestens 200 V, mindestens 300 V, mindestens 400 V oder mindestens 500 V, beaufschlagt sind. Das erste Bauteil und das zweite Bauteil können dabei das Gehäuse gemeinsam ausbilden, wobei beispielsweise das erste Bauteil in Form eines Deckels und das zweite Bauteil als Gehäuseschale vorliegt, welche mithilfe des Deckels verschließbar ist.

Die Befestigung des ersten Bauteils an dem zweiten Bauteil soll zumindest teilweise mithilfe der Befestigungseinrichtung erfolgen, wobei diese über die Schraube verfügt. Die Schraube weist zumindest den Betätigungsbereich und den Gewindebereich auf. Ersterer dient dem Angreifen eines Betätigungswerkzeugs, beispielsweise eines Schraubenschlüssels, eines Schraubendrehers oder dergleichen, an der Schraube. Der Betätigungsbereich weist zu diesem Zweck bevorzugt eine geeignete Außenkontur und/oder eine Ausnehmung mit einer, insbesondere auf das Betätigungswerkzeug angepassten, Innenkontur auf. Als Innenkontur kann jeder beliebige Schraubenkopfantrieb vorgesehen sein, beispielsweise ein Schlitz, ein Innenvierkant, ein Innensechskant, ein Kreuzschlitz, ein Innensechsrund, eine Torx-Kontur und/oder ein Innenvielzahn. Selbstverständlich können auch manipulationsgeschützte Varianten dieser Schraubenkopfantriebe realisiert werden, sodass die Innenkontur als Innensechskant-TR, Torx-TR, Tree-wing, Torq-Set oder Pentalobe vorliegt. Der Betätigungsbereich ist beispielsweise als Schraubenkopf ausgestaltet. In einer anderen Ausgestaltung bildet der Schraubenkopf lediglich einen Teil des Betätigungsbereichs aus.

An den Betätigungsbereich schließt sich mittelbar oder unmittelbar der Gewindebereich in axialer Richtung bezüglich einer Längsmittelachse der Schraube an. Der Gewindebereich weist ein Gewinde, bevorzugt ein Außengewinde, auf. Bei der Befestigung des ersten Bauteils an dem zweiten Bauteil greift das Gewinde in das zweite Bauteil ein. Beispielsweise wirkt es dabei mit einem in dem zweiten Bauteil ausgebildeten Innengewinde zusammen. Alternativ kann das Gewinde selbstverständlich auch als selbstschneidendes Gewinde oder dergleichen ausgestaltet sein. Zwischen dem Gewindebereich und dem Betätigungsbereich kann ein Verbindungsbereich vorgesehen sein, der insbesondere gewindelos ist. Nach der Befestigung der beiden Bauteile aneinander soll der Betätigungsbereich wenigstens bereichsweise, insbesondere vollständig, in der Aufnahme des ersten Bauteils angeordnet sein. So wird die Erreichbarkeit des Betätigungsbereichs zumindest erschwert, weil ein Benutzer nicht mehr ohne weiteres ein nicht für ein Lösen der Befestigung vorgesehenes Werkzeug mit dem Betätigungsbereich in Wirkverbindung bringen kann.

Der Stand der Technik zeigt beispielsweise die Druckschrift FR 2 239 146. Auch sind sogenannte Abreißschrauben bekannt. Bei derartigen Abreißschrauben bricht der Schraubenkopf während des Befestigens ab, insbesondere beim Anliegen beziehungsweise Überschreiten eines bestimmten Drehmoments an dem Schraubenkopf. Nachfolgend kann die Abreißschraube nur mit speziellem Werkzeug oder durch besondere Maßnahmen, wie beispielsweise Anbohren, gelöst werden. Das bedeutet jedoch, dass bei dem Befestigen der Bauteile aneinander der Schraubenkopf als Abfall anfällt und dass das Lösen der Verbindung äußerst aufwendig ist.

Einen weiteren Stand der Technik zeigt die Druckschrift US 4 209 660 A.

Es ist nun Aufgabe der Erfindung, eine Befestigungseinrichtung vorzuschlagen, welche gegenüber dem bekannten Stand der Technik Vorteile aufweist, insbesondere zuverlässig eine Manipulation der Befestigung des ersten Bauteils an dem zweiten Bauteil unterbindet oder zumindest den Nachweis einer derartigen Manipulation ermöglicht, wobei zudem unnötiger Abfall vermieden wird.

Dies wird erfindungsgemäß mit einer Bauteilanordnung mit den Merkmalen des Anspruchs 1 erreicht. Dabei ist vorgesehen, dass die Schraube einen sich an den Betätigungsbereich anschließenden Sicherheitsvorsprung aufweist, der auf der dem Gewindebereich abgewandten Seite des Betätigungsbereichs angeordnet ist und ein Rastelement aufweist, das mit einem Rastgegenelement einer die Aufnahme wenigstens bereichsweise abdeckenden Abdeckvorrichtung der Befestigungseinrichtung rastend zusammenwirkt. Die Schraube setzt sich also zumindest aus dem Gewindebereich, dem Betätigungsbereich und dem Sicherheitsvorsprung zusammen. Beispielsweise kann die Schraube ausschließlich aus diesen bestehen.

Unter dem Gewindebereich ist vorzugsweise lediglich derjenige Bereich zu verstehen, in welchem - in axialer Richtung bezüglich der Längsmittelachse der Schraube gesehen - das Gewinde beziehungsweise Außengewinde vorliegt. Der Betätigungsbereich umfasst entsprechend bevorzugt lediglich den Schraubenkopf, welcher beispielsweise einen Außendurchmesser aufweist, welcher größer ist als der Außendurchmesser des Gewindebereichs und/oder des Sicherheitsvorsprungs. Vorzugsweise schließt sich der Sicherheitsvorsprung unmittelbar an den Betätigungsbereich an, geht also von diesem aus. Es kann jedoch auch eine lediglich mittelbare Anordnung des Sicherheitsvorsprungs an dem Betätigungsbereich vorgesehen sein.

Es ist nun vorgesehen, dass der Sicherheitsvorsprung über das Rastelement verfügt, welches dem Halten der Abdeckvorrichtung dient. Zum Halten der Abdeckvorrichtung wirkt das Rastelement mit dem Rastgegenelement zusammen. Die Abdeckvorrichtung, welche Bestandteil der Befestigungseinrichtung ist, ist derart ausgestaltet, dass sie die Aufnahme wenigstens bereichsweise, insbesondere vollständig abdeckt. Das Abdecken erfolgt dabei vorzugsweise derart, dass der Betätigungsbereich der Schraube aus einer Außenumgebung der Befestigungseinrichtung, insbesondere also von außerhalb der Aufnahme, nicht beziehungsweise nicht ohne weiteres möglich ist. Beispielsweise liegt die Abdeckvorrichtung zu diesem Zweck in der Aufnahme vor, ist jedoch auf der dem Gewindebereich abgewandten Seite des Betätigungsbereichs angeordnet. Dabei ist es vorzugsweise vorgesehen, dass die Abdeckvorrichtung in radialer Richtung Außenabmessungen aufweist, welche den Innenabmessungen der Aufnahme entsprechen. Alternativ können die Außenabmessungen der Abdeckvorrichtung in radialer Richtung auch kleiner sein als die Innenabmessungen der Aufnahme. Bevorzugt betragen die Außenabmessungen jedoch mindestens 90 %, mindestens 80 %, mindestens 75 %, mindestens 70 %, mindestens 60 % oder mindestens 50 % der Innenabmessungen der Aufnahme.

Es kann auch vorgesehen sein, dass die Abdeckvorrichtung - in axialer Richtung gesehen - außerhalb der Aufnahme vorliegt. In diesem Fall kann sie Außenabmessungen in radialer Richtung entsprechend den vorstehenden Ausführungen aufweisen. Bevorzugt sind ihre Außenabmessungen in radialer Richtung jedoch größer als die Innenabmessungen der Aufnahme, beispielsweise betragen sie wenigstens 100 %, wenigstens 110 %, 120 % oder 125 % der Innenabmessungen. Mit einer derartigen Ausgestaltung, bei welcher die Abdeckvorrichtung in radialer Richtung größere Abmessungen aufweist als die Aufnahme wird erreicht, dass die Abdeckvorrichtung wenigstens bereichsweise außerhalb der Aufnahme an dem ersten Bauteil aufliegt, sodass der Zugriff auf den Betätigungsbereich der Schraube zuverlässig verhindert wird. Alternativ kann die Abdeckvorrichtung selbstverständlich auch in axialer Richtung von der Aufnahme beabstandet sein. Die Abdeckvorrichtung beziehungsweise ihr Rastgegenelement ist zum rastenden Zusammenwirken mit dem Sicherheitsvorsprung beziehungsweise dessen Rastelement vorgesehen. Das rastende Zusammenwirken wird beispielsweise durch eine formschlüssige Verbindung zwischen Rastelement und Rastgegenelement erzielt.

Eine bevorzugte Ausgestaltung der Erfindung sieht vor, dass der Sicherheitsvorsprung bezüglich einer Längsmittelachse der Schraube einen kreisrunden Querschnitt aufweist. Der Sicherheitsvorsprung verfügt insoweit über eine Außenkontur, welche rund ist, beispielsweise kreiszylinderförmig oder halbkugelförmig ist. Auf diese Art und Weise wird verhindert, dass über den Sicherheitsvorsprung ein auf das Lösen der Schraube gerichtetes Drehmoment auf diese aufgebracht wird. Zwar ist es möglich, beispielsweise mit einer Zange oder einem ähnlichen Werkzeug, an dem Sicherheitsvorsprung anzugreifen. Dies hinterlässt jedoch entsprechende Spuren, sodass nachfolgend die Manipulation der Befestigungseinrichtung zuverlässig festgestellt werden kann. Bevorzugt weist der Sicherheitsvorsprung auf derjenigen Seite der Abdeckvorrichtung, die dem Betätigungsbereich abgewandt ist, besonders bevorzugt der gesamte Sicherheitsvorsprung den kreisrunden Querschnitt auf.

Eine weitere Ausgestaltung der Erfindung sieht vor, dass ein dem Betätigungsbereich abgewandtes freies Ende des Sicherheitsvorsprungs kugelabschnittsförmig, insbesondere halbkugelförmig ist. Der Sicherheitsvorsprung schließt mit einem ersten Ende an den Betätigungsbereich unmittelbar an. Er endet an seiner dem ersten Ende gegenüberliegenden zweiten Ende, welches insoweit als freies Ende vorliegt. Die Kugelabschnittsform beziehungsweise Halbkugelform dieses freien Endes verhindert analog zu den vorstehenden Ausführungen ein Aufbringen eines Drehmoments, welches auf das Lösen der Schraube gerichtet ist. Zudem erleichtert es das Aufbringen der Abdeckvorrichtung auf den Sicherheitsvorsprung.

Eine besonders bevorzugte Ausgestaltung der Erfindung sieht vor, dass der Sicherheitsvorsprung in radialer Richtung Abmessungen aufweist, die kleiner sind als die kleinste radiale Abmessung des Betätigungsbereichs. Der Betätigungsbereich weist beispielsweise eine Außenkontur auf, welche im Querschnitt kreisrund ist. Alternativ liegt sie insbesondere als Außenmehrkant, beispielsweise als Außensechskant, Außenvierkant oder dergleichen vor. In radialer Richtung gesehen soll der Sicherheitsvorsprung über den gesamten Umfang hinweg an keiner Stelle über den Betätigungsbereich überstehen. Das bedeutet, dass seine größten Abmessungen in radialer Richtung kleiner sind als die kleinste radiale Abmessung des Betätigungsbereichs, jeweils über den gesamten Umfang des Sicherheitsvorsprungs beziehungsweise des Betätigungsbereichs gesehen. Durch eine derartige Ausgestaltung wird bei einer Montage der Bauteile aneinander mithilfe der Befestigungseinrichtung ein einfaches Angreifen an dem Betätigungsbereich und entsprechend ein einfaches Einschrauben der Schraube ermöglicht.

Erfindungsgemäß ist vorgesehen, dass das Rastelement als Rastvertiefung vorliegt. Entsprechend ist das Rastgegenelement beispielsweise als Rastvorsprung ausgestaltet. Die Rastvertiefung ist beispielsweise in Umfangsrichtung durchgehend an dem Sicherheitsvorsprung vorgesehen. Alternativ können selbstverständlich auch mehrere Rastvertiefungen beabstandet voneinander an dem Sicherheitsvorsprung ausgebildet sein. Die in Umfangsrichtung durchgehende Form der Rastvertiefung ist jedoch insoweit vorteilhaft, dass sie ein Anbringen der Abdeckvorrichtung in beliebiger Ausrichtung in Umfangsrichtung zulässt. Zusätzlich kann durch eine derartige Ausgestaltung die Abdeckvorrichtung drehbar an dem Sicherheitsvorsprung gelagert sein, sodass das Aufbringen eines Drehmoments auf diesen über die Abdeckvorrichtung effektiv und mit einfachen Mitteln verhindert wird.

Erfindungsgemäß ist weiter vorgesehen, dass die Abdeckvorrichtung als Klemmscheibe ausgebildet ist, wobei das Rastgegenelement wenigstens einen in die Rastvertiefung eingreifenden Rastvorsprung aufweist. Die Klemmscheibe weist beispielsweise eine übliche Ausgestaltung auf. Insbesondere weist sie einen Grundkörper auf, ausgehend von welchem sich das Rastgegenelement in radialer Richtung nach innen erstreckt. Sowohl der Grundkörper als auch das Rastgegenelement bestehen insbesondere aus Stahl, beispielsweise aus Federstahl. Auch andere Materialien, wie insbesondere Kunststoff, können jedoch Anwendung finden. Das Rastgegenelement weist den wenigstens einen Rastvorsprung auf. Besonders bevorzugt sind mehrere Rastvorsprünge vorgesehen, welche sich ausgehend von dem Grundkörper in radialer Richtung nach innen erstrecken, in Umfangsrichtung jedoch voneinander separiert sind. Die Rastvorsprünge liegen insoweit als Rastzungen, insbesondere als Rastfederzungen, vor. Beispielsweise ist eine gerade Anzahl an Rastvorsprüngen vorgesehen, wobei sich jeweils zwei der Rastvorsprünge diametral gegenüberliegen.

In einer weiteren Ausgestaltung der Erfindung kann vorgesehen, dass die Abdeckvorrichtung in radialer Richtung Abmessungen aufweist, die größer sind als die größte radiale Abmessung des Betätigungsbereichs. Mit einer derartigen Ausgestaltung der Abdeckvorrichtung wird effektiv ein Angreifen an dem Betätigungsbereich mithilfe eines ungeeigneten Werkzeugs verhindert. Die Abdeckvorrichtung ist bevorzugt derart angeordnet und ausgestaltet, dass ein Angreifen an dem Betätigungsbereich nur nach einem Entfernen der Abdeckvorrichtung von dem Sicherheitsvorsprung möglich ist. Wie bereits vorstehend angedeutet, kann die Abdeckvorrichtung beziehungsweise die Klemmscheibe zudem in radialer Richtung größere Abmessungen aufweisen als die Aufnahme. Schließlich kann vorgesehen sein, dass der Betätigungsbereich als Außenmehrkantbereich vorliegt. Unter dem Außenmehrkantbereich ist beispielsweise ein Außenvierkantbereich oder ein Außensechskantbereich zu verstehen, um lediglich die üblichsten Ausführungsformen zu nennen. Selbstverständlich können auch andere Ausgestaltungen realisiert werden.

Die Erfindung wird nachfolgend anhand der in der Zeichnung dargestellten Ausführungsbeispiele näher erläutert, ohne dass eine Beschränkung der Erfindung erfolgt. Dabei zeigt:
- Figur 1: eine Bauteileinrichtung mit einem ersten Bauteil, einem zweiten Bauteil und einer Befestigungseinrichtung,
- Figur 2: eine Detailansicht der Befestigungseinrichtung,
- Figur 3: eine Schnittdarstellung durch einen Bereich der Bauteilanordnung,
- Figur 4: eine Schraube der Befestigungseinrichtung, und
- Figur 5: eine Abdeckvorrichtung der Befestigungseinrichtung.

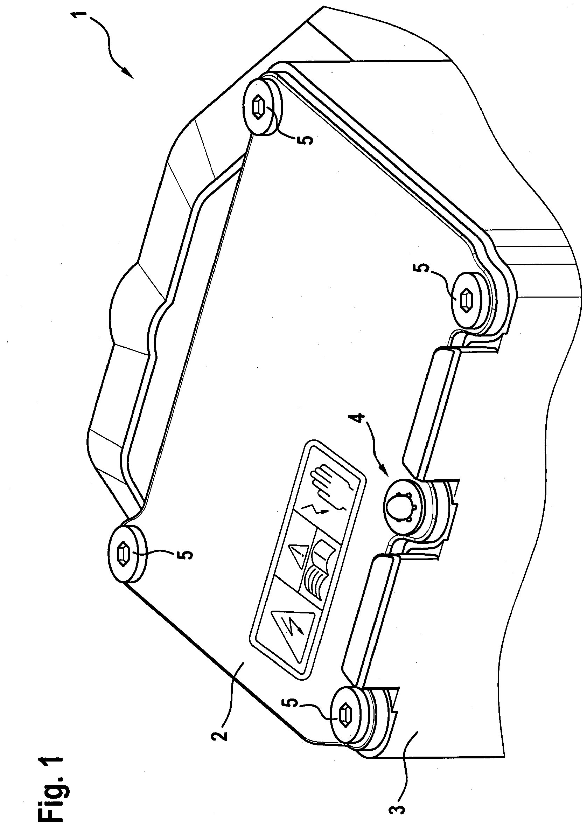

Die Figur 1 zeigt einen Bereich einer Bauteilanordnung 1, die ein erstes Bauteil 2, ein zweites Bauteil 3 sowie wenigstens eine Befestigungseinrichtung 4 aufweist. Die Bauteile 2 und 3 bilden beispielsweise ein Gehäuse für eine hier nicht gezeigte Einrichtung, wobei bevorzugt die Bauteile 2 und 3 diese Einrichtung nach ihrer Befestigung aneinander einschließen, insbesondere vollständig einschließen. Die Befestigungseinrichtung 4 dient dem manipulationsgeschützten Befestigen des ersten Bauteils 2 an dem zweiten Bauteil 3. Zusätzlich kann wenigstens ein weiteres Befestigungselement 5 zur Befestigung der Bauteile 2 und 3 aneinander vorgesehen sein, wobei das Befestigungselement 5 beispielsweise als Schraube vorliegt.

Die Befestigungseinrichtung 4 ist derart ausgestaltet, dass sie ein einfaches Befestigen der Bauteile 2 und 3 aneinander ermöglicht, jedoch ein Lösen der Befestigung verhindert oder zumindest erschwert. Insbesondere ist die Befestigungseinrichtung 4 derart ausgestaltet, dass eine Manipulation beziehungsweise ein Manipulationsversuch der Befestigungseinrichtung 4 nachfolgend ohne weiteres erkannt werden kann, beispielsweise durch dabei entstandene Beschädigungen an der Befestigungseinrichtung 4.

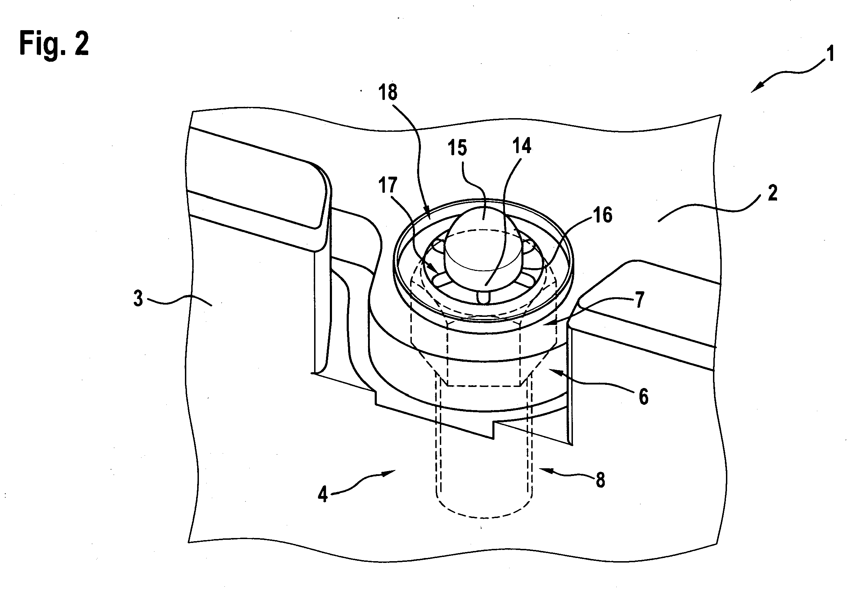

Die Figur 2 zeigt eine Detailansicht eines Bereichs der Bauteilanordnung 1, insbesondere der Befestigungseinrichtung 4. Es wird deutlich, dass die Befestigungseinrichtung 4 über eine Schraube 6 verfügt, die einen Betätigungsbereich 7 und einen Gewindebereich 8 aufweist. Der Betätigungsbereich 7 ist zum Angreifen eines geeigneten Werkzeugs ausgestaltet, in dem hier dargestellten Ausführungsbeispiel liegt er als Außensechskantbereich vor. Der Gewindebereich 8 ist mit einem Gewinde 9, insbesondere einem Außengewinde, versehen, welches beispielsweise mit einem in dem zweiten Bauteil 3 angeordneten weiteren Gewinde 10, insbesondere einem Innengewinde, zusammenwirkt.

Nach einer Montage der Bauteilanordnung 1, insbesondere einem Befestigen der Bauteile 2 und 3 mittels der Befestigungseinrichtung 4 aneinander, liegt der Betätigungsbereich 7 wenigstens bereichsweise in einer Aufnahme 11 vor, während der Gewindebereich 8 wenigstens bereichsweise in das zweite Bauteil 3 eingreift beziehungsweise mit diesem in Halteverbindung steht. Es kann vorgesehen sein, dass in axialer Richtung bezüglich einer Längsmittelachse 12 der Befestigungseinrichtung 4 ein Verbindungsbereich 13 zwischen dem Betätigungsbereich 7 und dem Gewindebereich 8 vorliegt. Alternativ kann jedoch auch vorgesehen sein, dass sich der Gewindebereich 8 bis hin zu dem Betätigungsbereich 7 erstreckt. In ersterem Fall schließt sich der Gewindebereich 8 lediglich mittelbar an dem Betätigungsbereich 7 an, während in letzterem Fall ein unmittelbares Anschließen gegeben ist.

Die Schraube 6 weist neben dem Betätigungsbereich 7 und dem Gewindebereich 8 einen Sicherheitsvorsprung 14 auf, welcher ein freies Ende 15 aufweist, mit welchem er sich von dem Betätigungsbereich 7 fort erstreckt. Der Sicherheitsvorsprung 14 schließt sich an den Betätigungsbereich 7 an. Das freie Ende 15 ist vorzugsweise kugelabschnittsförmig, insbesondere halbkugelförmig. An dem Sicherheitsvorsprung 14 ist ein Rastelement 16 vorgesehen, welches mit einem Rastgegenelement 17 einer Abdeckvorrichtung 18 rastend zusammenwirkt, um die Abdeckvorrichtung 18 an dem Sicherheitsvorsprung 14 zu halten.

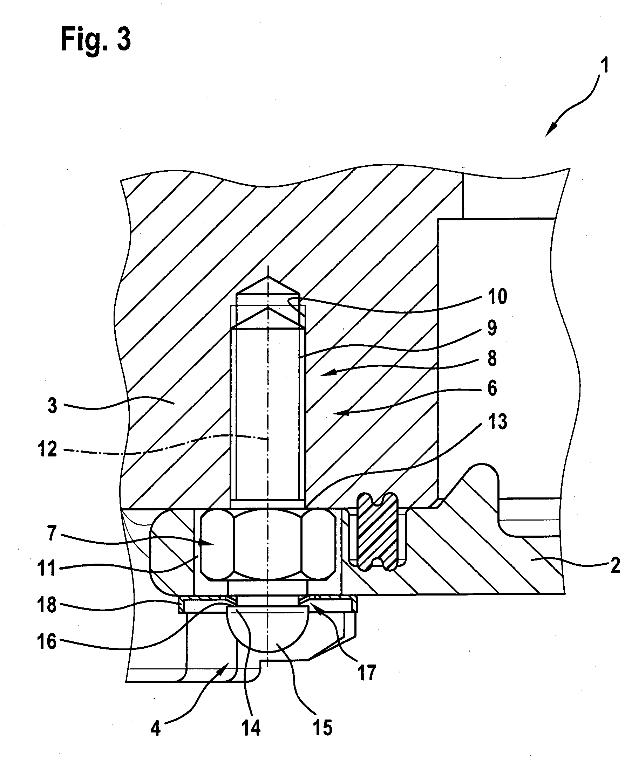

Die Figur 3 zeigt eine Schnittdarstellung durch einen Bereich der Bauteilanordnung 1. Es wird deutlich, dass der Betätigungsbereich 7 in axialer Richtung derart ausgestaltet ist, dass er wenigstens teilweise, insbesondere vollständig, in der Aufnahme 11 angeordnet ist. Besonders bevorzugt weist die Aufnahme 11 in axialer Richtung eine Tiefe auf, welche größer ist als die Höhe des Betätigungsbereichs 7. Der Sicherheitsvorsprung 14 ist derart ausgestaltet, dass er auf der dem Gewindebereich 8 abgewandten Seite aus der Aufnahme 11 hinausragt, also über das erste Bauteil 2 übersteht. Die an dem Sicherheitsvorsprung 14 angebrachte Abdeckvorrichtung 18 liegt beispielsweise als Klemmscheibe vor. Sie kann insoweit im Längsschnitt eine kreisrunde Außenkontur aufweisen.

Die Abdeckvorrichtung 18 weist in radialer Richtung Abmessungen auf, welche derart bemessen sind, dass die Abdeckvorrichtung 18 die Aufnahme 11 vollständig übergreift. Beispielsweise weist sie zu diesem Zweck Abmessungen auf, welche mindestens 105 %, mindestens 110 %, mindestens 115 %, mindestens 120 % oder mindestens 125 % der Abmessungen der Aufnahme 11 in radialer Richtung betragen. Auf diese Art und Weise wird verhindert, dass nach einem Befestigen der Abdeckvorrichtung 18 an dem Sicherheitsvorsprung 14 die Schraube 6 über den Betätigungsbereich 7 betätigt wird, also ein auf das Lösen der Schraube 6 gerichtetes Drehmoment über den Betätigungsbereich 7 eingebracht wird. Vielmehr muss zu diesem Zweck zunächst die Abdeckvorrichtung 18 entfernt oder alternativ an dem Sicherheitsvorsprung 14 angegriffen werden. Beides hinterlässt jedoch Spuren, sodass nachfolgend die Manipulation der Befestigungseinrichtung 4 einfach festzustellen ist.

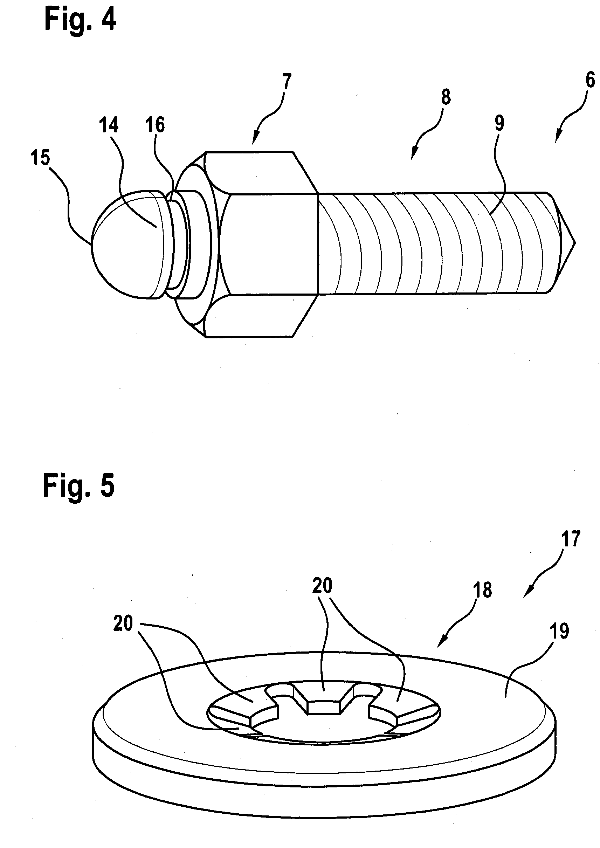

Die Figur 4 zeigt eine Detailansicht der Schraube 6. In dieser Darstellung ist deutlich erkennbar, dass das Rastelement 16 als Rastvertiefung ausgestaltet ist, welche zudem in Umfangsrichtung durchgehend vorliegt. Entsprechend ist durch das Rastelement 16 eine drehbare Lagerung der Abdeckvorrichtung 18 an dem Sicherheitsvorsprung 14 erzielt. Folglich kann über die Abdeckvorrichtung 18 kein Drehmoment auf die Schraube 6 aufgebracht werden.

Die Figur 5 zeigt eine Detaildarstellung der Abdeckvorrichtung 18, welche wie bereits vorstehend ausgeführt als Klemmscheibe vorliegt. Die Abdeckvorrichtung 18 besteht entsprechend aus einem Grundkörper 19, welcher vorzugsweise als Kreisring vorliegt. Ausgehend von dem Grundkörper 19 erstrecken sich Rastvorsprünge 20 des Rastgegenelements 17 in radialer Richtung nach innen. Die Rastvorsprünge 20 sind dabei federnd ausgestaltet, sodass ein einfaches Aufschieben über den Sicherheitsvorsprung 14 bis hin zu dem Rastelement 16 einfach möglich ist. Sobald die Rastvorsprünge 20 das Rastelement 16 beziehungsweise die Rastvertiefung erreichen, rasten sie ein, sodass nachfolgend die Abdeckvorrichtung 18 sicher an dem Sicherheitsvorsprung 14 gehalten ist. Ein Entfernen der Abdeckvorrichtung 18 von dem Sicherheitsvorsprung 14, welches zum Betätigen des Betätigungsbereichs 7 notwendig ist, hinterlässt deutliche Spuren, sodass die Manipulation der Befestigungseinrichtung 4 nachfolgend einfach feststellbar ist.

### BEZUGSZEICHENLISTE

- 1: Bauteilanordnung
- 2: 1. Bauteil
- 3: 2. Bauteil
- 4: Befestigungseinrichtung
- 5: Befestigungselement
- 6: Schraube
- 7: Betätigungsbereich
- 8: Gewindebereich
- 9: Gewinde
- 10: Gewinde
- 11: Aufnahme
- 12: Längsmittelachse
- 13: Verbindungbereich
- 14: Sicherheitsvorsprung
- 15: freies Ende
- 16: Rastelement
- 17: Rastgegenelement
- 18: Abdeckvorrichtung
- 19: Grundkörper
- 20: Rastvorsprung

## Patentansprüche

1. Bauteilanordnung (1) mit einem ersten Bauteil (2), einem zweiten Bauteil (3) und wenigstens einer Befestigungseinrichtung (4) zur manipulationsgeschützten Befestigung des ersten Bauteils (2) an dem zweiten Bauteil (3), die über eine Schraube (6) verfügt, die einen zumindest teilweise in einer Aufnahme (11) des ersten Bauteils (2) angeordneten Betätigungsbereich (7) und einen sich an den Betätigungsbereich (7) anschließenden, mit dem zweiten Bauteil (3) in Halteverbindung stehenden Gewindebereich (8) aufweist, **dadurch gekennzeichnet, dass** die Schraube (6) einen sich an den Betätigungsbereich (7) anschließenden Sicherheitsvorsprung (14) aufweist, der auf der dem Gewindebereich (8) abgewandten Seite des Betätigungsbereichs (7) angeordnet ist und ein Rastelement (16) aufweist, das mit einem Rastgegenelement (17) einer die Aufnahme (11) wenigstens bereichsweise abdeckenden Abdeckvorrichtung (18) der Befestigungseinrichtung (4) rastend zusammenwirkt, wobei die Abdeckvorrichtung (18) als Klemmscheibe ausgebildet ist, und wobei das Rastgegenelement (17) wenigstens einen in das als Rastvertiefung ausgebildete Rastelement (16) eingreifenden Rastvorsprung (20) aufweist, sodass zum Betätigen des Betätigungsbereichs (7) ein Spuren hinterlassendes Entfernen der Klemmscheibe (18) von dem Sicherheitsvorsprung (14) notwendig ist, sodass eine Manipulation der Befestigungseinrichtung (4) feststellbar ist.

2. Bauteilanordnung nach Anspruch 1, **dadurch gekennzeichnet, dass** der Sicherheitsvorsprung (14) bezüglich einer Längsmittelachse (12) der Schraube (6) einen kreisrunden Querschnitt aufweist.

3. Bauteilanordnung nach einem der vorhergehenden Ansprüche, **dadurch gekennzeichnet, dass** ein dem Betätigungsbereich (7) abgewandtes freies Ende (15) des Sicherheitsvorsprungs (14) kugelabschnittsförmig, insbesondere halbkugelförmig ist.

4. Bauteilanordnung nach einem der vorhergehenden Ansprüche, **dadurch gekennzeichnet, dass** der Sicherheitsvorsprung (14) in radialer Richtung Abmessungen aufweist, die kleiner sind als die kleinste radiale Abmessung des Betätigungsbereichs (7).

5. Bauteilanordnung nach einem der vorhergehenden Ansprüche, **dadurch gekennzeichnet, dass** die Abdeckvorrichtung (18) in radialer Richtung Abmessungen aufweist, die größer sind als die größte radiale Abmessung des Betätigungsbereichs (7).

6. Bauteilanordnung nach einem der vorhergehenden Ansprüche, **dadurch gekennzeichnet, dass** der Betätigungsbereich (7) als Außenmehrkantbereich vorliegt.

7. Bauteilanordnung nach einem der vorhergehenden Ansprüche, **dadurch gekennzeichnet, dass** die Abdeckvorrichtung (18) die Ausnehmung (11) wenigstens bereichsweise, insbesondere vollständig, abdeckt.

## Claims

1. Component assembly (1) with a first component (2), a second component (3) and at least one securing device (4) for securing the first component (2) onto the second component (3) in a manner that protects against manipulation, which has a screw (6), which includes an operating area (7) arranged at least partly in a mount (11) of the first component (2) and a threaded section (8) adjoining the operating area (7) and in holding connection with the second component (3), **characterised in that** the screw (6) includes a safety projection (14) adjoining the operating area (7) which safety projection is arranged on the side of the operating area (7) facing away from the threaded section (8) and includes a latching element (16), which cooperates with a latching counter element (17) of a covering device (18) of the securing device (4) covering the mount (11) at least partly, wherein the covering device (18) is designed as a clamping disc, and wherein the latching counter element (17) includes at least one latching projection (20) engaging in the latching element (16) designed as a latching depression so that to activate the operating area (7) it is necessary to remove the clamping disc (18) from the safety projection (14) leaving a trace, so that manipulation of the securing device (4) can be established.

2. Component assembly according to claim 1, **characterised in that** the safety projection (14) includes a circular cross-section relative to a longitudinal centre line (12) of the screw (6).

3. Component assembly according to any of the preceding claims, **characterised in that** a free end (15) of the safety projection (14) facing away from the operating area (7) is in the form of a spherical segment, in particular a semi-spherical segment.

4. Component assembly according to any of the preceding claims, **characterised in that** the safety projection (14) includes dimensions in radial direction which are smaller than the smallest radial dimension of the operating area (7).

5. Component assembly according to any of the preceding claims, **characterised in that** the covering device (18) includes dimensions in radial direction which are greater than the greatest radial dimension of the operating area (7).

6. Component assembly according to any of the preceding claims, **characterised in that** the operating area (7) is in the form of an external polygonal section.

7. Component assembly according to any of the preceding claims, **characterised in that** the covering device (18) covers the recess (11) at least partly, in particular fully.

## Revendications

1. Agencement de composants (1) avec un premier composant (2), un deuxième composant (3) et au moins un dispositif de fixation (4) pour la fixation inviolable du premier composant (2) au deuxième composant (3), qui dispose d'un écrou (6), qui présente une zone d'actionnement (7) agencée au moins en partie dans un logement (11) du premier composant (2) et une zone taraudée (8) se raccordant à la zone d'actionnement (7), en liaison de retenue avec le deuxième composant (3), **caractérisé en ce que** l'écrou (6) présente une saillie de sécurité (14) se raccordant à la zone d'actionnement (7), qui est agencée sur le côté de la zone d'actionnement (7) opposé à la zone taraudée (8) et présente un élément d'arrêt (16), qui coopère par encliquetage avec un contre-élément d'arrêt (17) d'un dispositif de recouvrement (18) du dispositif de fixation (4) recouvrant au moins par zone le logement (11), dans lequel le dispositif de recouvrement (18) est réalisé en tant que rondelle de serrage, et dans lequel le contre-élément d'arrêt (17) présente au moins une saillie d'arrêt (20) venant en prise dans l'élément d'arrêt (16) réalisé en tant qu'évidement d'arrêt, de sorte qu'un retrait laissant des traces de la rondelle de serrage (18) de la saillie de sécurité (14) est nécessaire pour l'actionnement de la zone d'actionnement (7), de sorte qu'une manipulation du dispositif de fixation (4) puisse être constatée.

2. Agencement de composants selon la revendication 1, **caractérisé en ce que** la saillie de sécurité (14) présente une section transversale circulaire par rapport à un axe médian longitudinal (12) de l'écrou (6).

3. Agencement de composants selon l'une quelconque des revendications précédentes, **caractérisé en ce qu'**une extrémité libre (15) opposée à la zone d'actionnement (7) de la saillie de sécurité (14) est en forme de section de sphère, en particulier de forme semi-sphérique.

4. Agencement de composants selon l'une quelconque des revendications précédentes, **caractérisé en ce que** la saillie de sécurité (14) présente dans la direction radiale des dimensions, qui sont inférieures à la plus petite dimension radiale de la zone d'actionnement (7).

5. Agencement de composants selon l'une quelconque des revendications précédentes, **caractérisé en ce que** le dispositif de recouvrement (18) présente dans la direction radiale des dimensions, qui sont supérieures à la plus grande dimension radiale de la zone d'actionnement (7).

6. Agencement de composants selon l'une quelconque des revendications précédentes, **caractérisé en ce que** la zone d'actionnement (7) est présente en tant que zone polygonale extérieure.

7. Agencement de composants selon l'une quelconque des revendications précédentes, **caractérisé en ce que** le dispositif de recouvrement (18) recouvre l'évidement (11) au moins par zones, en particulier complètement.
